# EUROPÄISCHE PATENTANMELDUNG

(11) **EP 3 508 047 A1**
(43) Veröffentlichungstag der Anmeldung: **10.07.2019**
(21) Anmeldenummer: 18212214.3
(22) Anmeldetag: 13.12.2018
(51) Int. Cl.: A01C 15/04, A01C 17/00, A01C 7/08

(54) **ANORDNUNG ZUM AUSBRINGEN VON STREUGUT AUF LANDWIRTSCHAFTLICHEN FLÄCHEN**

(30) Priorität: 09.01.2018 DE 102018100305
(71) Anmelder: Lehner Agrar GmbH, 89198 Westerstetten (DE)
(72) Erfinder: Hübner, Ralf, 73072 Donzdorf (DE)
(74) Vertreter: Baur & Weber Patentanwälte PartG mbB

(57) **Zusammenfassung**

Es wird eine Anordnung zum Ausbringen von Streugut auf landwirtschaftlichen Flächen, insbesondere zur Abgabe von granularem oder körnigem Streugut zur Aussaat, Düngung oder Schädlingsbekämpfung, angegeben, die einen Vorratsbehälter (VB) zur Aufnahme des Streuguts und eine Dosiereinheit (DE) zum Weitertransport des Streuguts mittels einer Gebläsevorrichtung (GV) an eine Verteilereinheit (VE) umfasst, wobei die Verteilereinheit (VE) eine Vielzahl von Anschlüssen (AS) aufweist, die jeweils mit einem Tellerstreuer (TS) verbunden sind, wobei die Tellerstreuer (TS) nebeneinander liegend so angeordnet sind, dass das Streugut entlang einer Arbeitsbreite homogen ausbringbar ist.

## Beschreibung

Die Erfindung betrifft eine Anordnung zum Ausbringen von Streugut auf landwirtschaftlichen Flächen, insbesondere zur Abgabe von granularem oder körnigem Streugut zur Aussaat, Düngung oder Schädlingsbekämpfung.

Aus dem allgemeinen Stand der Technik sind unterschiedliche Arten von Steuern bekannt, die üblicherweise zum Ausbringen von Saatgut, Düngemitteln oder Schädlingsbekämpfungsmitteln verwendet werden. Streugut umfasst granulare oder körnige Produkte, wie z.B. Saatgut für Zwischenfrüchte, Schneckenkorn, Grassamen zur Grünlandübersaat oder auch Siliermittel während des Festfahrens im Silo. Streugut soll dabei homogen über einen größeren Bereich auf landwirtschaftliche Flächen ausgebracht werden können.

Generell wird zwischen Tellerstreuern und pneumatischen Steuern unterschieden, die je nach Einsatzzweck für unterschiedliche Arbeitsbreiten bzw. Streuhomogenitäten eingesetzt werden können.

Eine bekannte Streuanordnung ist beispielsweise aus der DE 35 32 756 C1 in Form eines Schleuderstreuers für gekörnte Düngemittel bekannt. Bei der bekannten Anordnung ist ein Verbindungsarm durch eine flexible Platte in der Behälterwand hindurchgeführt und mit einem außen liegenden Ende mit einer Exzenterbuchse verbunden und an seinem in den Behälter ragenden Ende mit einem Rüttelwerk versehen, welches mehrere horizontale Rührfinger aufweist und eine Schwingbewegung in zwei horizontale Richtungen in einer Ebene knapp oberhalb einer Ausfallöffnung im Behälterboden ausführt.

Aus der DE 20 2005 008 941 U1 ist eine Streuanordnung mit einem Streugutbehälter und wenigstens einem unterhalb einer Ausgabeöffnung angeordneten Streuteller bekannt. Der Streuteller rotiert um eine aufrechte Achse, wobei eine Rührwerkwelle über eine zu einer Drehachse koaxiale Gewindeverbindung mit dem Streuteller verbunden ist.

Aus der DE 10 2013 110 991 B3 ist ein Dosiersystem einer landwirtschaftlichen Verteilmaschine zum Ausbringen von körnigem oder granuliertem Material bekannt, die einen Vorratsbehälter, ein Zellenrad, ein Gebläse mit angeschlossenem pneumatischem Transportsystem sowie eine Verteileinrichtung aufweist. Die Verteileinrichtung verteilt das aus dem Vorratsbehälter stammende und mittels einer Zellenradschleuse dosierte Material gleichmäßig und leitet die Teilströme in Säscharen oder Verteildüsen.

Aus der US 5,324,143 ist eine Vorrichtung zum Übertragen von partikelförmigem Material, wie z. B. Saatgut, von einem Vorratsbehälter zu einer Sämaschine bekannt, bei der ein pneumatisches Fördersystem mit einer Drehluftschleuse zum Einführen des partikelförmigem Materials verwendet wird. Die Vorrichtung enthält ferner ein Gebläse zum Beaufschlagen des pneumatischen Fördersystems mit Druck sowie eine Abgabevorrichtung zur Abgabe des partikelförmigen Materials in Saatkästen.

Aus der US 2017/121130 A1 ist ein pneumatisches Verteilungssystem zum Verteilen eines körnigen Produkts an ein landwirtschaftliches Gerät gezeigt. Das System umfasst mehrere Drucksensoren, so dass eine Druckdifferenz bestimmt werden kann, um Warnsignale an einer Bedienerschnittstelle auszugeben.

Insbesondere bei der Bestellung größerer landwirtschaftlicher Flächen ist es jedoch vorteilhaft, den Arbeitsbereich beim Ausbringen körniger Materialien weiter zu verbessern. Der Erfinder hat sich daher ausgehend von den oben beschriebenen bekannten Vorrichtungen die Aufgabe gestellt, eine Anordnung zu schaffen, die über einen großen Arbeitsbereich eine möglichst homogene Ausgabe von körnigem Streugut vornehmen kann.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird eine Anordnung zum Ausbringen von Streugut auf landwirtschaftlichen Flächen, insbesondere zur Abgabe von granularem oder körnigem Streugut zur Aussaat, Düngung oder Schädlingsbekämpfung, geschaffen, die einen Vorratsbehälter zur Aufnahme des Streuguts und eine Dosiereinheit zum Weitertransport des Streuguts mittels einer Gebläsevorrichtung an eine Verteilereinheit umfasst, wobei die Verteilereinheit eine Vielzahl von Anschlüssen aufweist, die jeweils mit einem Tellerstreuer verbunden sind, wobei die Tellerstreuer nebeneinander liegend so angeordnet sind, dass das Streugut entlang einer Arbeitsbreite ausbringbar ist, die größer als die Arbeitsbreite eines einzelnen Tellerstreuers ist.

Demnach ermöglicht die erfindungsgemäße Anordnung einen großen Arbeitsbereich, da ausgehend von einem Vorratsbehälter zunächst eine Verteilung des körnigen Streuguts mittels eines von der Gebläsevorrichtung abgegebenen Luftstroms erfolgt. Somit verlässt eine dosierte Menge von Streugut die Verteilereinheit, so dass über die Vielzahl von Tellerstreuern eine große Arbeitsbreite erreicht werden kann. Die Erfindung kombiniert dabei die Eigenschaften eines pneumatischen Streuers mit dem eines Tellerstreuers, wobei der pneumatischen Streuer als Zuführung für die Tellerstreuer dient.

Die nebeneinander liegend angeordneten Tellerstreuer müssen jeweils nur einen für sich alleine genommenen kleinen Arbeitsbereich abdecken. Durch die variable Anzahl von Tellerstreuern ist demnach der Arbeitsbereich in sinnvollen Grenzen erweiterbar. Insbesondere im Vergleich zu Tellerstreuern lassen sich mit der erfindungsgemäßen Anordnung wesentlich größere Arbeitsbreiten erreichen, da das körnige Streugut nicht mehr über die ganze Distanz geschleudert werden muss, so dass über die Vorverteilung mittels der Gebläseeinheit die physikalischen Flugeigenschaften minimiert werden.

Aufgrund der Kombination des Drucklufttransports und des Verteilens mittels des Tellerstreuers lässt sich eine deutlich verbesserte Ablagegenauigkeit des körnigen Streuguts, eine geringere Windanfälligkeit und eine höhere Flächenleistung erreichen.

Zwischen einem Anschluss an der Verteilereinheit und einem Tellerstreuer kann jeweils eine schlauchförmige Verbindung ausgebildet sein.

Das Verbinden der Verteileinheit mit den Tellerstreuern über schlauchförmige Verbindungen ermöglicht eine einfache, insbesondere auch nachträgliche Befestigung an bereits bestehenden Arbeitsmaschinen.

Die Dosiereinheit kann als Zellenradwelle ausgebildet sein.

Die an sich bereits aus dem Stand der Technik bekannte Dosierung des körnigen Streuguts mittels eines Zellenrads ermöglicht eine genaue Dosierung der Zuführung zu den einzelnen Tellerstreuern.

Der Vorratsbehälter, die Dosiereinheit und die Gebläsevorrichtung können an einer fahrbaren Arbeitsmaschine und die Tellerstreuer an einem Gestänge angeordnet sein. Bevorzugt sind die Tellerstreuer quer zu einer Fahrtrichtung der Arbeitsmaschine an dem Gestänge angeordnet.

Typischerweise werden mehr als zwei, vorzugsweise bis zu acht Tellerstreuer an dem Gestänge angeordnet werden, wobei die Tellerstreuer gleiche Abstände zueinander aufweisen können. Das Gestänge kann Bestandteil einer Spritzvorrichtung sein.

Dies ist insbesondere dann vorteilhaft, wenn die Anordnung an einem Gestell befestigt wird, das auch gleichzeitig als Spritzvorrichtung zum Ausbringen wässriger Sprühmittel verwendet werden kann. Derartige Spritzvorrichtungen werden in der Landwirtschaft oftmals mit Arbeitsbreiten von 42 m oder mehr ausgebildet, so dass gemäß der Erfindung nun das Ausbringen von körnigem Streugut mit der gleichen Arbeitsbreite erfolgen kann. Die angegebene Arbeitsbreite ist hier lediglich beispielhaft zu verstehen und kann durch einen anderen, landwirtschaftlichen Vorgaben entsprechenden Wert ersetzt werden.

Daher ist es nicht mehr notwendig, entweder zusätzliche Fahrspuren für das Ausbringen körniger Streugüter bereitzustellen oder aber in Bereichen, in denen bisherige Streuer kein Streugut abgeben konnten, zusätzlich mit anderen, beispielsweise manuellen Verfahren, für ein Ausbringen von körnigem Streugut zu sorgen. Dadurch ist eine wesentlich effizientere Bewirtschaftung landwirtschaftlicher Flächen möglich, was insbesondere bei großflächigen Bewirtschaftungen eine signifikante Kostenreduzierung zur Folge hat.

Der Aufgabepunkt auf den Tellerstreuer erfolgt dabei mittels der schlauchförmigen Zuführungen, die mit relativ geringem Gewicht herstellbar sind, so dass die Zuführungsleitungen und die Tellerstreuer beispielsweise am Gestänge einer Spritze befestigt werden können. Der Vorratsbehälter sowie die Dosiereinheit können direkt auf einer Arbeitsmaschine befestigt sein.

Um eine Vielzahl von Anwendungsfällen abdecken zu können, kann es vorteilhaft sein, die gesamte Arbeitsbreite durch Variation der Anzahl der Tellerstreuer sowie der individuellen Arbeitsbreite eines Tellerstreuers einstellbar zu gestalten. Die individuelle Arbeitsbreite eines Tellerstreuers wird hierzu durch Variation der Drehzahl seines Streutellers eingestellt.

Desweiteren kann es vorteilhaft sein, wenn einzelne Tellerstreuer während des Betriebs der Anordnung abschaltbar oder zuschaltbar sind.

Demnach wird eine Möglichkeit einer einzelnen Abschaltung oder Zuschaltung von durch einen einzelnen Tellerstreuer abgedeckten Teilbreiten durch Schalten eines Anschlusses geschaffen. Dadurch ist es möglich, die an der Anordnung außen liegenden Tellerstreuer aber auch eine beliebigen anderen Tellerstreuer zu- und abzuschalten. Durch die Abschaltung können asymmetrische Felder besser bestreuet werde. Dies ist insbesondere bei Spitz- oder Dreiecksfeldern vorteilhaft.

Nachfolgend werden einige Ausführungsbeispiele anhand der Zeichnung näher erläutert. Es zeigen:
- Fig. 1: in einer schematischen Seitenansicht eine erfindungsgemäße Anordnung gemäß einer ersten Ausführungsform der Erfindung,
- Fig. 2: die Anordnung aus Fig. 1 in einer Draufsicht,
- Fig. 3: eine weitere Ausführungsform einer erfindungsgemäßen Anordnung in einer schematischen Seitenansicht.

In den Figuren sind gleiche oder funktional gleich wirkende Bauelemente mit den gleichen Bezugszeichen versehen.

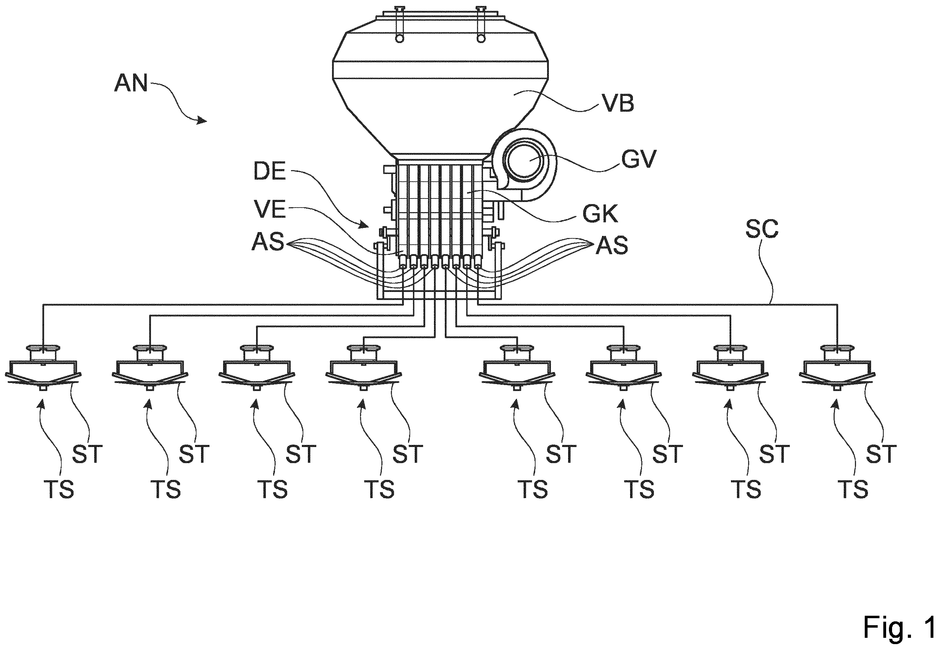

Unter Bezugnahme auf Fig. 1 wird nachfolgend eine erste Ausführungsform der Erfindung beschrieben. In Fig. 1 ist eine Anordnung AN schematisch in einer Seitenansicht gezeigt. Die Anordnung AN umfasst einen Vorratsbehälter VB, der Streugut aufnehmen kann. Als Streugut kann beispielsweise granulares oder körniges Streugut zur Aussaat, Düngung oder Schädlingsbekämpfung in den Vorratsbehälter VB eingebracht werden. Der Vorratsbehälter VB ist auf einem Gerätekörper GK montiert, der Streugut aus dem Vorratsbehälter VB aufnehmen kann und einer Dosiereinheit DE zuführen kann. Dazu ist eine Gebläsevorrichtung GV vorgesehen, die das Streugut mittels eines Luftstroms fortbewegt.

Das Streugut wird somit der Dosiereinheit DE zugeführt, die auf fachübliche Weise als Zellenradwelle ausgeführt sein kann, so dass das Streugut am Ausgang der Dosiereinheit DE einer Verteilereinheit VE zugeführt wird, die eine Vielzahl von Anschlüssen AS aufweist. Innerhalb des Gerätekörpers GK besteht somit eine Verbindung vom Vorratsbehälter VB zu jedem der Anschlüsse AS, die lediglich im Bereich der Dosiereinheit DE von der Zellenradwelle unterbrochen sind. Typischerweise wird daher für jeden der Anschlüsse AS ein Zellenrad auf der Zellenradwelle bereit gestellt sein. Die Dosierung mittels der Dosiereinheit DE kann daher auf fachübliche Weise durch Variation der Drehgeschwindigkeit der Zahnradwelle eingestellt werden. Dabei ist es auch möglich, die Zahnradwelle austauschbar zu gestalten, so dass durch unterschiedlich geformte Zahnradwellen eine Anpassung der Ober- bzw. Untergrenze des zu dosierenden Bereichs vorgenommen werden kann.

Jeder der Anschlüsse AS ist mit einem Tellerstreuer TS verbunden, wobei in Fig. 1 hierzu eine schlauchförmige Verbindung SC schematisch angedeutet ist. Die schlauchförmige Verbindung SC wird einer Eintrittsöffnung EO des Tellerstreuers TS zugeführt, so dass das Streugut mittels des von der Gebläsevorrichtung GV erzeugten Luftstroms von dem Anschluss AS über die schlauchförmige Verbindung SC zur Eintrittsöffnung EO gelangt, die oberhalb eines Streutellers ST angeordnet ist. Folglich gelangt das Streugut auf den rotierenden Streuteller ST eines jeden Tellerstreuers TS, so dass eine Verteilung des Streuguts mittels des Streutellers ST erfolgen kann.

Die Arbeitsbreite eines jeden Tellerstreuers TS ist dabei durch Variation der Drehzahl des Streutellers ST einstellbar, wobei auch die Anzahl der Tellerstreuer TS, die mit jeweils einem Anschluss AS verbunden werden, in vernünftigen Grenzen variabel ist. Somit ist die Gesamtarbeitsbreite der in Fig. 1 gezeigten Anordnung AN um ein Vielfaches größer als die eines einzelnen Tellerstreuers TS. Gleichzeitig wird durch die nebeneinander liegende Anordnung der Tellerstreuer TS eine homogene Verteilung des Streuguts mittels des Streutellers ST erreicht. Ebenso können einzelne Tellerstreuer TS während des Betriebs der Anordnung AN gezielt abschaltbar oder zuschaltbar sein, um beispielsweise Dreiecks- oder Spitzfelder zu bestreuen.

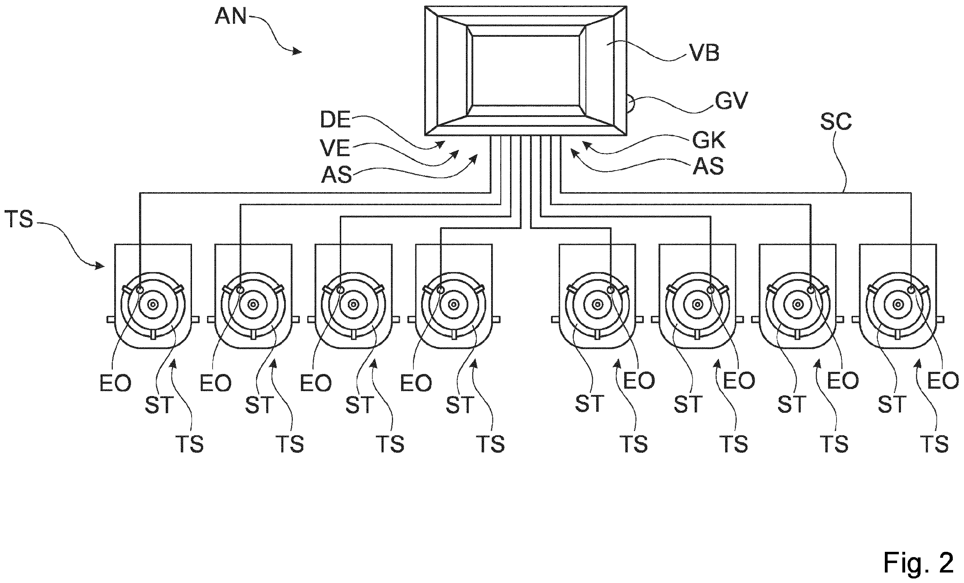

In Fig. 2 ist die in Fig. 1 gezeigte Anordnung nochmals in einer Draufsicht gezeigt. Man erkennt, dass das über die schlauchförmige Verbindung SC der Eintrittsöffnung EO zugeführte Streugut den Aufgabepunkt auf den Tellerstreuer TS festlegt. Da sowohl der nun vorratsbehälterlose Tellerstreuer TS als auch die schlauchförmigen Verbindungen SC mit geringem Gewicht herstellbar sind, kann eine nachträgliche Montage dieser Bauteile vorgenommen werden, wobei lediglich eine Verbindung mit den Anschlüssen AS hergestellt werden muss. Die Gebläsevorrichtung GV, die Zellenradwelle der Dosiereinheit DE sowie der Antrieb des Streutellers ST können dabei als Elektromotoren ausgeführt sein, so dass diese vom Bordnetz einer Arbeitsmaschine, beispielsweise eines landwirtschaftlichen Fahrzeugs versorgt werden können. Eine derartige Versorgung, beispielsweise mittels eines 12-V-Bordnetzes ist wesentlich einfacher und kostengünstiger durchzuführen, als eine Versorgung über mechanische Kopplungen anhand von Wellen oder dergleichen.

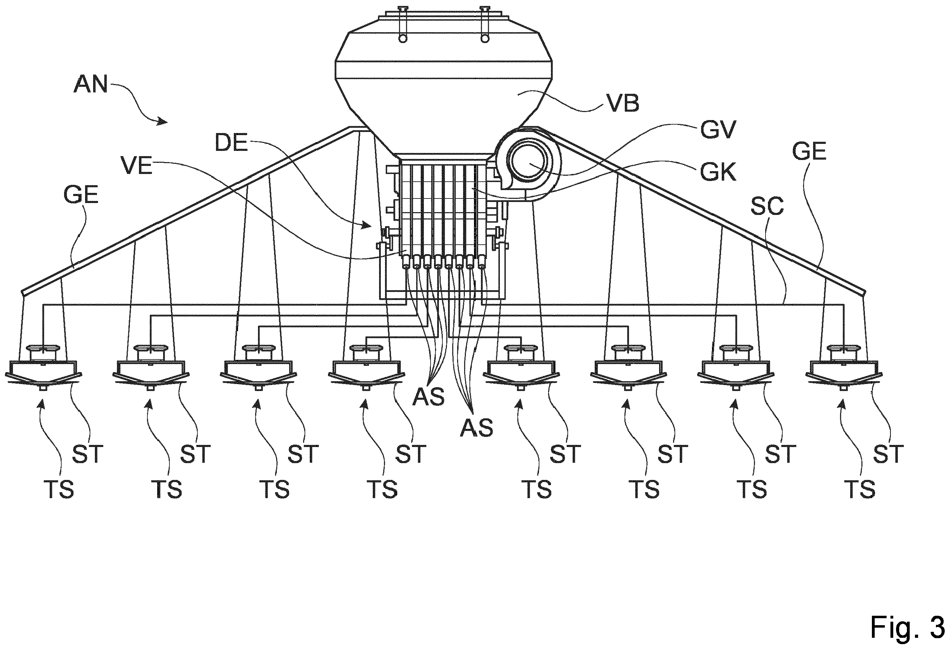

Die große Arbeitsbreite in Kombination mit dem geringen Gewicht der Tellerstreuer TS und der schlauchförmigen Verbindungen SC der Anordnung AN ist insbesondere dann vorteilhaft, wenn die Anordnung AN an einem Gestänge GE befestigt wird, wie in Fig. 3 gezeigt ist.

Das Gestänge GE ist hier Bestandteil einer Spritzvorrichtung zum Ausbringen wässriger Sprühmittel, wie sie oftmals in der Landwirtschaft verwendet werden. Derartige Spritzvorrichtungen werden typischerweise mit Arbeitsbreiten von 40 m oder mehr ausgebildet, so dass gemäß der Erfindung nun das Ausbringen von körnigem Streugut mit der gleichen Arbeitsbreite erfolgen kann.

In der in Fig. 3 gezeigten Ausführungsform werden die Tellerstreuer TS quer zu einer Fahrtrichtung der Arbeitsmaschine an dem Gestänge GE angeordnet. Wenn beispielsweise acht Tellerstreuer TS angebracht werden, können Streubreiten von 42 m und mehr erreicht werden. Dadurch ist eine effiziente Bewirtschaftung landwirtschaftlicher Flächen möglich. Dies bewirkt insbesondere bei großflächigen Bewirtschaftungen eine signifikante Kostenreduzierung.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Liste der Bezugszeichen:

- AN: Anordnung
- AS: Anschluss
- DE: Dosiereinheit
- EO: Eintrittsöffnung
- GE: Gestänge
- GK: Gerätekörper
- GV: Gebläsevorrichtung
- SC: Verbindung
- ST: Streuteller
- TS: Tellerstreuer
- VB: Vorratsbehälter
- VE: Verteilereinheit

## Patentansprüche

1. Anordnung zum Ausbringen von Streugut auf landwirtschaftlichen Flächen, insbesondere zur Abgabe von granularem oder körnigem Streugut zur Aussaat, Düngung oder Schädlingsbekämpfung, die einen Vorratsbehälter (VB) zur Aufnahme des Streuguts und eine Dosiereinheit (DE) zum Weitertransport des Streuguts mittels einer Gebläsevorrichtung (GV) an eine Verteilereinheit (VE) umfasst, wobei die Verteilereinheit (VE) eine Vielzahl von Anschlüssen (AS) aufweist, die jeweils mit einem Tellerstreuer (TS) verbunden sind, wobei die Tellerstreuer (TS) nebeneinander liegend so angeordnet sind, dass das Streugut entlang einer Arbeitsbreite homogen ausbringbar ist.

2. Anordnung nach Anspruch 1, bei der jeweils zwischen einem Anschluss (AS) an der Verteilereinheit (VE) und einem Tellerstreuer (TS) eine schlauchförmige Verbindung (SC) ausgebildet ist.

3. Anordnung nach Anspruch 1 oder 2, bei der die Dosiereinheit (DE) als Zellenradwelle ausgebildet ist.

4. Anordnung nach einem der Ansprüche 1 bis 3, bei der der Vorratsbehälter (VB), die Dosiereinheit (DE) und die Gebläsevorrichtung (GV) an einer fahrbaren Arbeitsmaschine angeordnet sind.

5. Anordnung nach einem der Ansprüche 1 bis 4, bei der die Tellerstreuer (TS) an einem Gestänge (GE) angeordnet sind.

6. Anordnung nach Anspruch 5, bei der die Tellerstreuer (TS) quer zu einer Fahrtrichtung der Arbeitsmaschine an dem Gestänge (GE) angeordnet sind.

7. Anordnung nach einem der Ansprüche 5 oder 6, bei der mehr als zwei, vorzugsweise bis zu acht Tellerstreuer (TS) an dem Gestänge (GE) angeordnet sind.

8. Anordnung nach Anspruch 7, bei der die Tellerstreuer (TS) gleiche Abstände zueinander aufweisen.

9. Vorrichtung nach einem der Ansprüche 5 bis 8, bei der das Gestänge (GE) Bestandteil einer Spritzvorrichtung ist.

10. Anordnung nach einem der Ansprüche 1 bis 9, bei der die gesamte Arbeitsbreite ungefähr 42 m oder mehr beträgt.

11. Anordnung nach einem der Ansprüche 1 bis 10, bei der die gesamte Arbeitsbreite durch Variation der Anzahl der Tellerstreuer (TS) sowie der individuellen Arbeitsbreite eines Tellerstreuers (TS) einstellbar ist.

12. Anordnung nach einem der Ansprüche 1 bis 11, bei der einzelne Tellerstreuer (TS) während des Betriebs der Anordnung abschaltbar oder zuschaltbar sind.
